# EUROPEAN PATENT APPLICATION

(11) **EP 4 687 125 A1**
(43) Date of publication of application: **04.02.2026**
(21) Application number: 25188025.8
(22) Date of filing: 08.07.2025
(51) Int. Cl.: G07C 9/00, B60R 25/24, B60R 25/20

(54) **VEHICLE AND MANAGEMENT SERVER**

(30) Priority: 31.07.2024 JP 2024125147
(71) Applicant: TOYOTA JIDOSHA KABUSHIKI KAISHA, Toyota-shi, Aichi-ken 471-8571 (JP)
(72) Inventor: KOBAYASHI, Junya, Toyota-shi, 471-8571 (JP); HOMMA, Hiroki, Toyota-shi, 471-8571 (JP); HASEGAWA, Yosuke, Ohguchi-cho, 480-0195 (JP); MURASE, Junji, Ohguchi-cho, 480-0195 (JP); MORI, Yuki, Ohguchi-cho, 480-0195 (JP)
(74) Representative: J A Kemp LLP

(57) **Abstract**

A vehicle includes a wireless communication device and a proximity communication device. The vehicle receives a registration request for an owner key from a management server. The vehicle executes an activation process for the owner key via wireless communication using the wireless communication device in a case in which the received registration request includes information indicating that an owner device is a virtual device implemented on a server. The vehicle executes the activation process for the owner key via proximity communication using the proximity communication device in a case in which the received registration request does not include the information indicating that the owner device is the virtual device.

## Description

### CROSS-REFERENCE TO RELATED APPLICATIONS

This application is based upon and claims the benefit of priority from Japanese Patent Application No. 2024-125147, filed on July 31, 2024, the entire contents of which are incorporated herein by reference.

### BACKGROUND

### 1. Field

The present disclosure relates to a vehicle and a management server.

### 2. Description of Related Art

Japanese Laid-Open Patent Publication No. 2024-001720 discloses a digital key management system. The management system includes a vehicle, multiple devices, and a management server. In the management system, digital key-related information is stored in both the vehicle and the devices, so that the digital key for the vehicle is registered to the devices. The management server is capable of communicating with both the devices and the vehicle. The management server manages registration of the digital keys.

In the management system disclosed in the above-described publication, an owner device having an owner key issues friend keys to multiple friend devices selected on the owner device.

Thus, the owner device, to which the owner key is registered, has the capability to issue friend keys. The management system authenticates the owner key by using proximity communication between the owner device and the vehicle, thereby activating the owner key. Upon activation of the owner key, the owner device is allowed to be used as a digital key, enabling operations such as unlocking the vehicle, starting the vehicle, and issuing friend keys.

Depending on the type of the owner device, the method of activating the owner key by authentication via proximity communication may not be suitable.

### SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, a vehicle includes a wireless communication device configured to communicate, via a wireless communication network, with a device to which a digital key can be registered and a management server that manages the digital key, a proximity communication device configured to communicate with the device via proximity communication, and an execution device configured to execute a registration process for the digital key. The device includes an owner device belonging to an owner of the vehicle. The digital key includes an owner key registered to the owner device. The execution device is configured to execute an activation process for the owner key when receiving a registration request of the owner key from the management server. The execution device is configured to execute the activation process via wireless communication using the wireless communication device in a case in which the registration request includes information indicating that the owner device is a virtual device implemented on a server, and the activation process via proximity communication using the proximity communication device in a case in which the registration request does not include the information indicating that the owner device is the virtual device.

In another general aspect, a management server forms part of a digital key system that activates a digital key using information that is related to the digital key and stored in a vehicle and information that is related to the digital key and stored in a device. The management server being configured to manage the digital key. The device includes an owner device belonging to an owner of the vehicle. The digital key includes an owner key registered to the owner device. The management server includes a wireless communication device configured to communicate with the owner device and the vehicle, and an execution device. The execution device is configured to determine whether the owner device is a virtual device implemented on a server by referencing classification information that indicates whether the owner device is the virtual device, and when determining that the owner device is the virtual device, use the wireless communication device to transmit a registration request including information indicating that the owner device is the virtual device to the vehicle.

Other features and aspects will be apparent from the following detailed description, the drawings, and the claims.

### BRIEF DESCRIPTION OF THE DRAWINGS

Fig. 1 is a schematic diagram showing a digital key management system according to an embodiment.
Fig. 2 is a schematic diagram showing a configuration of the management server shown in Fig. 1.
Fig. 3 is a schematic diagram showing a configuration of the owner device shown in Fig. 1 that is a portable information terminal.
Fig. 4 is a schematic diagram showing a configuration of an owner device that is a virtual machine implemented on the server shown in Fig. 1.
Fig. 5 is a schematic diagram showing a configuration of the friend device shown in Fig. 1.
Fig. 6 is a schematic diagram showing a configuration of the guest device shown in Fig. 1.
Fig. 7 is a schematic diagram showing a configuration of a vehicle shown in Fig. 1.
Fig. 8 is a schematic diagram showing owner key information shown in Fig. 3 and Fig. 4.
Fig. 9 is a schematic diagram showing data in a database of the management server shown in Fig. 2.
Fig. 10 is a sequence diagram of an owner key registration process executed by the management system shown in Fig. 1 when the owner device is a portable information terminal.
Fig. 11 is a sequence diagram of an owner key registration process executed by the management system shown in Fig. 1 when the owner device is a virtual machine.
Fig. 12 is a flowchart showing processes executed by the management server shown in Fig. 2 in an owner key registration process.
Fig. 13 is a schematic diagram showing contract information stored in a storage device of the management server shown in Fig. 2.
Fig. 14 is a flowchart showing processes executed by the vehicle shown in Fig. 7 upon receiving an owner key registration request.

Throughout the drawings and the detailed description, the same reference numerals refer to the same elements. The drawings may not be to scale, and the relative size, proportions, and depiction of elements in the drawings may be exaggerated for clarity, illustration, and convenience.

### DETAILED DESCRIPTION

This description provides a comprehensive understanding of the methods, apparatuses, and/or systems described. Modifications and equivalents of the methods, apparatuses, and/or systems described are apparent to one of ordinary skill in the art. Sequences of operations are exemplary, and may be changed as apparent to one of ordinary skill in the art, with the exception of operations necessarily occurring in a certain order. Descriptions of functions and constructions that are well known to one of ordinary skill in the art may be omitted.

Exemplary embodiments may have different forms, and are not limited to the examples described. However, the examples described are thorough and complete, and convey the full scope of the disclosure to one of ordinary skill in the art.

In this specification, "at least one of A and B" should be understood to mean "only A, only B, or both A and B."

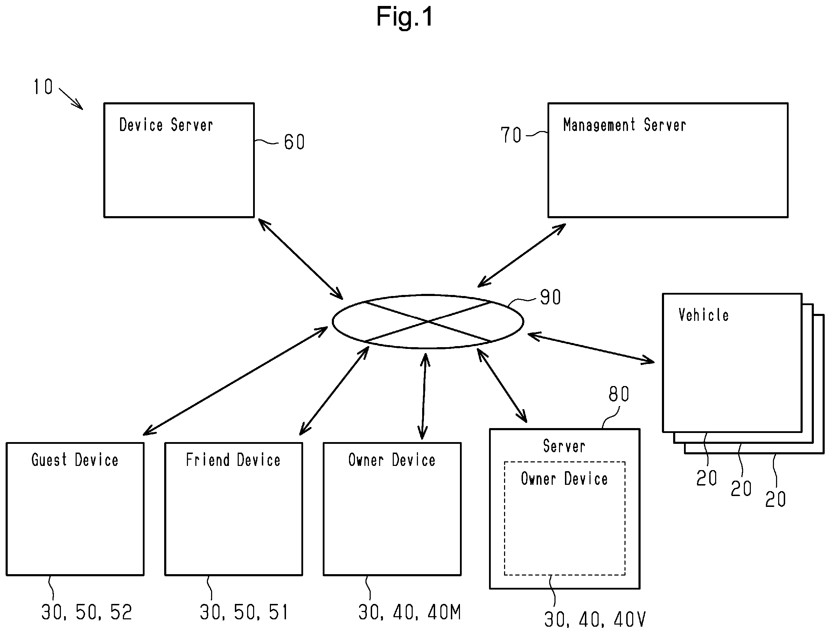

A management system 10 including vehicles 20 according to an embodiment will now be described with reference to Figs. 1 to 14.

Standards for digital keys have been established by the Car Connectivity Consortium (CCC). The digital key functionality in the present embodiment conforms to the standards established by the Car Connectivity Consortium (CCC).

### Overview of Management System 10

As shown in Fig. 1, the management system 10 includes multiple vehicles 20, multiple devices 30, a device server 60, a management server 70, and a server 80. The vehicles 20, the devices 30, the device server 60, the management server 70, and the server 80 are capable of communicating with each other via a network 90. The network 90 is a wireless communication network.

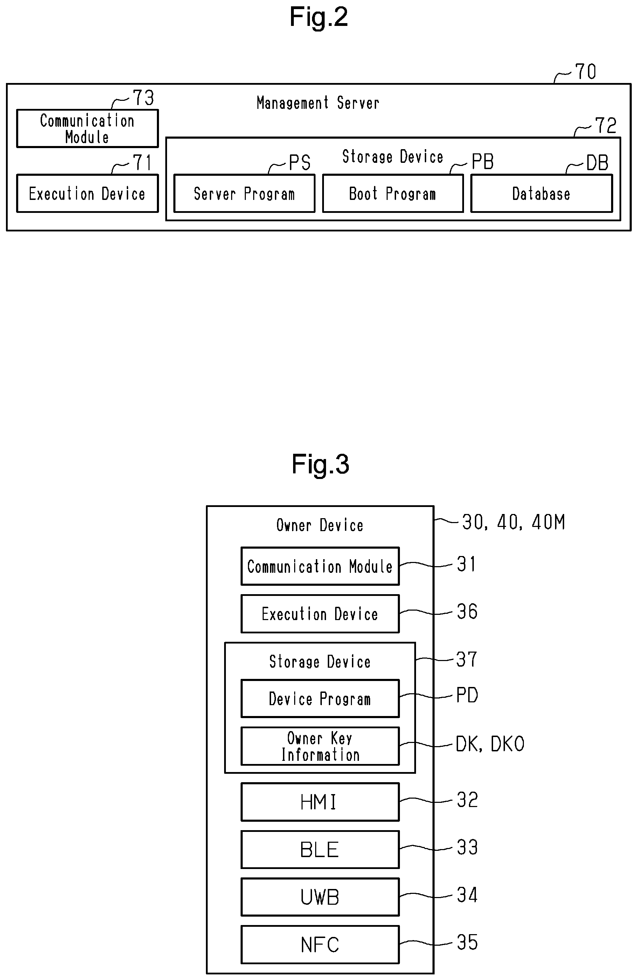

The management server 70 manages digital keys. As shown in Fig. 2, the management server 70 includes an execution device 71, a storage device 72, and a communication module 73. The execution device 71 is processing circuitry including one or more processors that execute various processes according to computer programs (software). The communication module 73 is a wireless communication device that wirelessly communicates with the devices 30, the vehicles 20, and the server 80. The storage device 72 stores a server program PS, a boot program PB, and a database DB. The server program PS is executed by the execution device 71 to cause the execution device 71 to register digital keys to the database DB and delete digital keys from the database DB. The boot program PB is executed by the execution device 71 to cause the execution device 71 to generate a command for starting apparatuses in the vehicle 20 necessary for authentication of digital keys and notify the vehicle 20 of the command. The data DA included in the database DB is partitioned by vehicle. In a state in which digital keys are registered, the management server 70 stores, as the data DA, information indicating devices 30 to which key information DK indicating the digital keys is stored.

As shown in Fig. 1, the multiple devices 30 include owner devices 40 and shareable devices 50. The shareable devices 50 include a friend device 51 and a guest device 52. The devices 30 include not only portable information terminals such as smartphones but also a virtual machine implemented on the server 80. Hereinafter, the owner device 40 that is a portable information terminal will be referred to as a portable device 40M, and the owner device 40 that is a virtual machine will be referred to as a virtual device 40V.

As shown in Fig. 3, the portable device 40M includes a communication module 31, a Human Machine Interface (HMI) 32, a Bluetooth Low Energy (BLE) module 33, an Ultra Wide Band (UWB) module 34, a Near Field Communication (NFC) module 35, an execution device 36, and a storage device 37.

The communication module 31 is a wireless communication device that performs wireless communication via the network 90. The HMI 32 includes an input device, which undergoes input operations performed by the user of the portable device 40M, and an output device, which presents information to the user. The output device is, for example, a monitor and a speaker.

The BLE module 33 performs short-range wireless communication with the vehicles 20 via BLE communication. The UWB module 34 performs short-range wireless communication with the vehicles 20 via UWB communication. The NFC module 35 performs short-range wireless communication with the vehicles 20 via NFC communication. The BLE module 33, the UWB module 34, and the NFC module 35 are all proximity communication devices.

The storage device 37 stores a device program PD and key information DK. The device program PD is executed by the execution device 36 to cause the execution device 36 to store and delete the key information DK. The key information DK is information indicating digital keys.

The device program PD includes, for example, a device application and a digital key framework. The device application is an application for storing and deleting the key information DK. The digital key framework is a program that provides functions of pairing of the devices 30 and sharing of digital keys by using an API prepared in the OS. The execution device 36 executes the device program PD to execute processes related to storage and deletion of the key information DK. The execution device 36 is processing circuitry including one or more processors that execute various processes according to computer programs (software).

The key information DK is information indicating digital keys. The owner device 40 stores owner key information DKO indicating the owner key KO as the key information DK. The owner key KO is a digital key, and only one owner key KO is allowed to be registered to one vehicle 20. Therefore, there is only one owner key KO for each vehicle 20. The owner device 40 is a device 30 belonging to the owner of one vehicle 20.

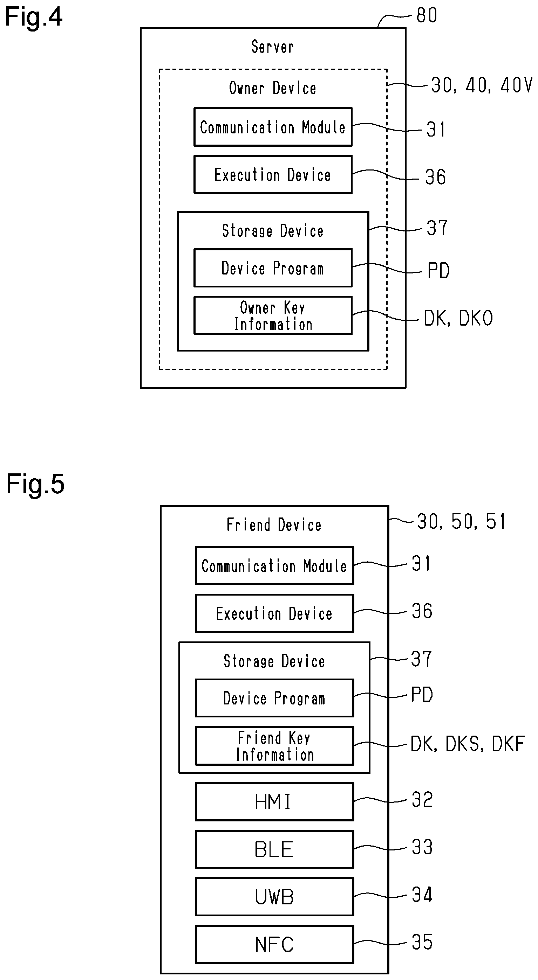

As shown in Fig. 4, the virtual device 40V includes a communication module 31, an execution device 36, and a storage device 37. The communication module 31, the execution device 36, and the storage device 37 included in the virtual device 40V may be virtual components that use designated regions of the communication module 31, the execution device 36, and the storage device 37 of the server 80. Similar to the portable device 40M, the storage device 37 stores a device program PD and key information DK. The execution device 36 executes the device program PD to execute processes related to storage and deletion of the key information DK. The execution device 36 is processing circuitry including one or more processors that execute various processes according to computer programs (software).

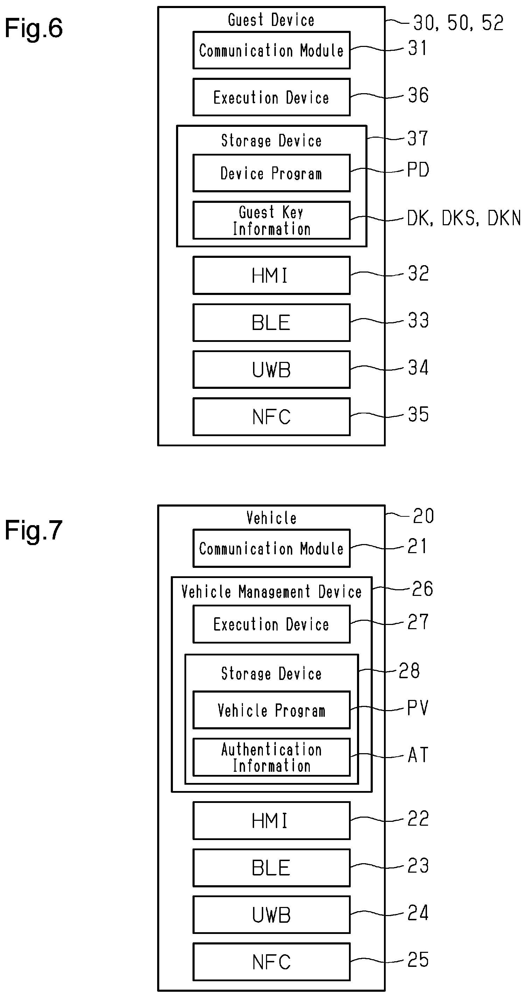

As shown in Figs. 5 and 6, the shareable devices 50 each store shareable key information DKS indicating a shareable key KS as the key information DK. The shareable devices 50 are devices 30 that are separate from the owner devices 40. The shareable keys KS are digital keys, and multiple shareable keys KS are allowed to be registered to each vehicle 20. That is, multiple shareable keys KS may be associated with a single vehicle 20, thereby allowing multiple shareable keys KS to be used with the same vehicle 20.

The friend device 51, which is included in the shareable devices 50, is, for example, a portable information terminal such as a smartphone. As shown in Fig. 5, the friend device 51 includes, like the portable device 40M, a communication module 31, an HMI 32, a BLE module 33, a UWB module 34, an NFC module 35, an execution device 36, which is processing circuitry, and a storage device 37. The storage device 37 stores a device program PD, key information DK, and shareable key information DKS. In the friend device 51, the key information DK is friend key information DKF indicating a friend key.

The guest device 52, which is included in the shareable devices 50, is, for example, a portable information terminal such as a smartphone. As shown in Fig. 6, the guest device 52 includes, like the portable device 40M, a communication module 31, an HMI 32, a BLE module 33, a UWB module 34, an NFC module 35, an execution device 36, which is processing circuitry, and a storage device 37. The storage device 37 stores a device program PD, key information DK, and shareable key information DKS. In the guest device 52, the key information DK is guest key information DKN indicating a guest key.

The types of the shareable keys KS include a friend key KF and a guest key KN. The friend key KF is a shareable key KS that has been registered based on a direct registration request from the owner device 40, as described later. The guest key KN is a shareable key KS that has been registered based on a registration request from the friend device 51, as described later. The guest key KN is a shareable key KS that has been registered based on a registration request from another device 30, rather than a direct registration request from the owner device 40. In other words, the guest key KN refers to a shareable key KS that is not a friend key KF among the shareable keys KS.

As shown in Fig. 7, each vehicle 20 includes a communication module 21, an HMI 22, a BLE module 23, a UWB module 24, an NFC module 25, and a vehicle management device 26. The communication module 21 is a wireless communication device that performs wireless communication with the management server 70 via the network 90. The HMI 22 includes an input device, which undergoes input operations performed by the user of the vehicle 20, and an output device, which presents information to the user. The output device is, for example, a monitor and a speaker.

The BLE module 23 performs short-range wireless communication with the devices 30 via BLE communication. The UWB module 24 performs short-range wireless communication with the devices 30 via UWB communication. The UWB module 24 measures the distance between the devices 30 and the vehicle 20. The NFC module 25 performs short-range wireless communication with the devices 30 via NFC communication. The BLE module 23, the UWB module 24, and the NFC module 25 are all proximity communication devices. The vehicle management device 26 is mounted on the vehicle 20. The vehicle management device 26 manages the digital keys of the vehicle 20. The vehicle management device 26 is, for example, a digital key ECU. The vehicle management device 26 includes an execution device 27 and a storage device 28. The execution device 27 is processing circuitry including one or more processors that execute various processes according to computer programs (software). The storage device 28 stores a vehicle program PV and authentication information AT.

The vehicle program PV is executed by the execution device 27 to cause the execution device 27 to store and delete the authentication information AT. The authentication information AT is information related to digital keys. Specifically, the authentication information AT is information for authenticating a digital key so that the vehicle 20 can be controlled using the digital key when the digital key is used. The authentication information AT is provided for each digital key to be authenticated. The execution device 27 is a CPU. The execution device 27 executes the vehicle program PV to execute processes related to storage and deletion of the authentication information AT.

A state in which the digital key is registered refers to a state in which the digital key is enabled for use. In a state in which the digital key is registered, the vehicle 20 stores the authentication information AT, and the devices 30 store the key information DK. When the vehicle management device 26 authenticates the digital key, the vehicle management device 26 enables control of the vehicle 20 using the authenticated digital key. For example, upon authentication of the digital key, the vehicle management device 26 enables unlocking of the vehicle 20. In another example, upon authentication of the digital key, the vehicle management device 26 enables starting of the vehicle 20. The digital key is activated through authentication by the vehicle management device 26.

The device server 60 shown in Fig. 1 relays communication between the devices 30, which are portable information terminals, and the management server 70.

Fig. 1 illustrates only one device server 60. However, a separate device server 60 may be provided for each type of device 30. That is, the device server 60 used for communication with a first type of device 30 may differ from the device server 60 used for communication with a second type of device 30. For example, the type may refer to the model of the device 30, and a separate device server 60 may be provided for each device model. In another example, the type may refer to the communication line used by the device 30, and a separate device server 60 may be provided for each type of communication line.

Each of the device servers 60 relays communication between the corresponding device 30 and the management server 70. The devices 30 of different types are each capable of communicating with the management server 70 via the corresponding device server 60.

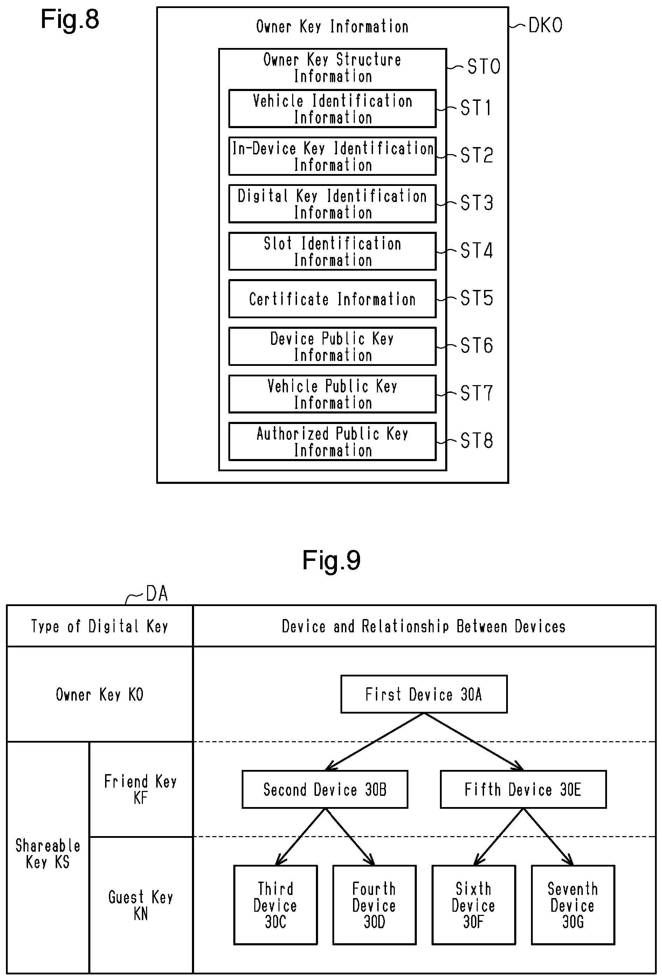

The portable device 40M and the virtual device 40V each store the owner key information DKO. As shown in Fig. 8, the owner key information DKO includes owner key structure information STO. The owner key structure information STO includes vehicle identification information ST1, in-device key identification information ST2, digital key identification information ST3, and slot identification information ST4. The owner key structure information STO further includes certificate information ST5, device public key information ST6, vehicle public key information ST7, and authorized public key information ST8.

The vehicle identification information ST1 is information that identifies the vehicle 20 for which digital keys are set. For example, the vehicle identification information ST1 may be the ID of the vehicle 20.

The in-device key identification information ST2 is used for management of digital keys in the device 30. The in-device key identification information ST2 is information that identifies the digital keys in the application of the device 30.

The digital key identification information ST3 is used for management of digital keys in the management server 70. The slot identification information ST4 is information that identifies digital keys locally within the devices 30.

The certificate information ST5 indicates a certificate that authenticates digital keys. The device public key information ST6 indicates a device public key PKD, which is a public key of the device 30. The device public key PKD in the owner key information DKO indicates the public key of the owner device 40. The vehicle public key information ST7 indicates a vehicle public key PKV, which is a public key of the vehicle 20. The authorized public key information ST8 indicates the vehicle public key PKV that has already been authorized.

As shown in Fig. 9, in the database DB of the management server 70, the data DA of one vehicle 20 includes information related to the types of digital keys registered to the vehicle 20, the registered devices 30, and the relationship between the registered devices 30. The digital keys are categorized into multiple hierarchical levels according to their respective types. From highest to lowest in the hierarchy, the digital keys are ordered as the owner key KO, the friend key KF, and the guest key KN. Digital keys at higher hierarchical levels are assigned greater authority.

The authority includes, for example, the number of shareable keys KS that may be requested for registration, and the scope of control over the vehicle 20 enabled through authentication of the digital key. Digital keys at higher hierarchical levels are permitted to request registration of a greater number of shareable keys KS. Specifically, for example, the number of friend keys KF that an owner device 40 is permitted to request for registration is greater than the number of guest keys KN that a friend device 51 is permitted to request for registration.

Further, as the hierarchical level of a digital key increases, the scope of control permitted over the vehicle 20 also increases. The scope of vehicle control permitted by a digital key may include, for example, control of engine start, control of power activation, and control of door unlocking and locking for the vehicle 20. For example, when the scope of permitted control includes all three control functions described above, it is broader than a scope limited to only door unlocking and locking. More specifically, the friend key KF permits execution of all three control functions, whereas the guest key KN permits only door unlocking and locking of the vehicle 20.

A state will now be described in which digital keys are registered to seven devices 30 for one vehicle 20. The seven devices 30 are first to seventh devices 30A to 30G.

The device 30 to which the owner key KO is registered as a digital key is the first device 30A. In other words, the first device 30A is the owner device 40.

The devices 30 to which the shareable keys KS are registered as digital keys are the second device 30B, the third device 30C, the fourth device 30D, the fifth device 30E, the sixth device 30F, and the seventh device 30G. In other words, the second device 30B, the third device 30C, the fourth device 30D, the fifth device 30E, the sixth device 30F, and the seventh device 30G are the shareable devices 50.

Specifically, the devices 30 to which the friend key KF is registered as the shareable key KS are the second device 30B and the fifth device 30E. In other words, the second device 30B and the fifth device 30E are the friend devices 51. The devices 30 to which the guest key KN is registered as the shareable key KS are the third device 30C, the fourth device 30D, the sixth device 30F, and the seventh device 30G. In other words, the third device 30C, the fourth device 30D, the sixth device 30F, and the seventh device 30G are the guest devices 52.

The relationship between the registered devices 30 included in the data DA will now be described. The relationship between the second device 30B and the first device 30A is such that the friend key KF has been registered to the second device 30B in response to a registration request from the first device 30A. The relationship between the fifth device 30E and the first device 30A is such that the friend key KF has been registered to the fifth device 30E in response to a registration request from the first device 30A.

The relationship between the third device 30C and the second device 30B is such that the guest key KN has been registered to the third device 30C in response to a registration request from the second device 30B. The relationship between the fourth device 30D and the second device 30B is such that the guest key KN has been registered to the fourth device 30D in response to the registration request from the second device 30B.

The relationship between the sixth device 30F and the fifth device 30E is such that the guest key KN has been registered to the sixth device 30F in response to a registration request from the fifth device 30E. The relationship between the seventh device 30G and the fifth device 30E is such that the guest key KN has been registered to the seventh device 30G in response to a registration request from the fifth device 30E.

As described above, the data DA includes information related to the devices 30 to which the digital keys have been registered. In the data DA, each registered device 30 is associated with information indicating another device 30 that requested the registration.

### Registration of Digital Keys

Next, a series of processes for registering digital keys in the management system 10 will be described. The registration of digital keys includes the registration of the owner key KO, the registration of the friend key KF, and the registration of the guest key KN. First, a series of processes in which the owner key KO is registered to the portable device 40M and activated will be described. Next, a series of processes in which the owner key KO is registered to the virtual device 40V and activated will be described. Hereinafter, processes executed by the execution device 27 of the vehicle 20 will be described as processes executed by the vehicle 20. The processes executed by the execution devices 36 of the portable device 40M and the virtual device 40V will be described as processes executed by the portable device 40M and the virtual device 40V. The processes executed by the execution device 71 of the management server 70 will be described as processes executed by the management server 70.

### Registration of the Owner Key KO in the Portable Device 40M

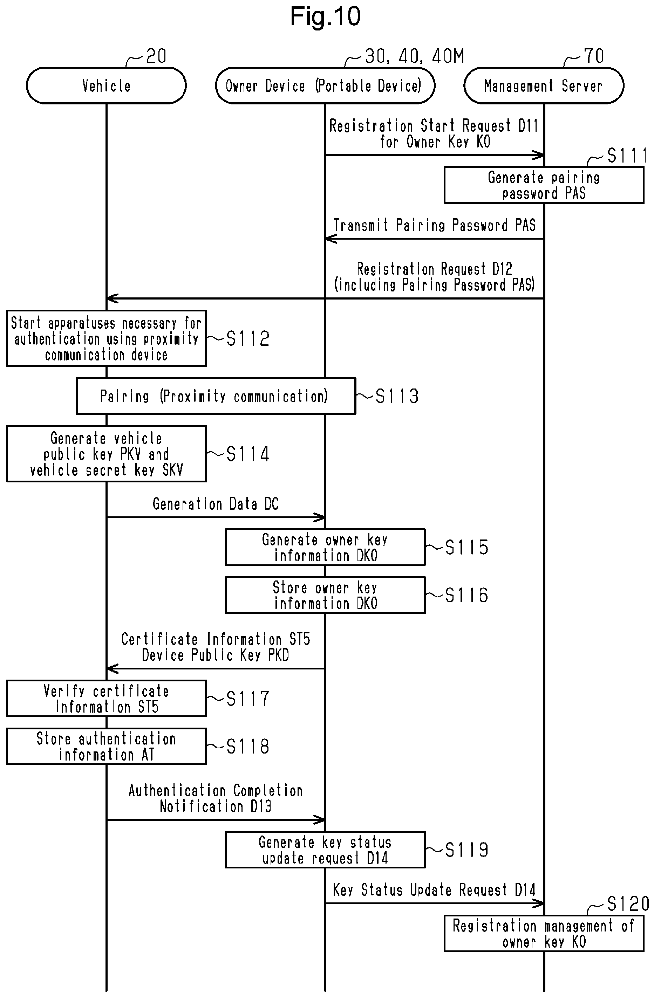

As shown in Fig. 10, the management system 10 execute a series of processes for registering the owner key KO of the vehicle 20 to the portable device 40M. The portable device 40M, which is the owner device 40, activates the owner key KO via proximity communication with the vehicle 20.

In the management system 10, the owner key information DKO, which is the key information DK indicating the owner key KO of the vehicle 20, is stored in the portable device 40M by registering the owner key KO. In the management system 10, the authentication information AT for authenticating the owner key KO is stored in the vehicle 20. When the owner key KO is authenticated by the vehicle 20 and the owner key KO is registered to the management server 70, the owner key KO is activated.

As shown in Fig. 10, when the management server 70 receives a registration start request D11 for the owner key KO from the portable device 40M, the registration process for the owner key KO is started. The registration start request D11 includes owner device identification information described later. In step S111, the management server 70 generates a pairing password PAS used for pairing the portable device 40M with the vehicle 20. Thereafter, the management server 70 uses the communication module 73 to transmit information indicating the pairing password PAS to the portable device 40M. The management server 70 uses the communication module 73 to transmit a registration request D12 including the information indicating the pairing password PAS to the vehicles 20. Upon receiving the registration request D12, the vehicle 20 starts apparatuses necessary for authentication of the owner key KO using the proximity communication device in step S112. These apparatuses include, for example, the BLE module 23, the UWB module 24, the NFC module 25, and the digital key ECU included in the vehicle management device 26. By starting these apparatuses, the vehicle 20 is enabled to both wait for and execute the authentication of the digital key using a proximity communication device.

Next, in step S113, when the owner of the vehicle 20 approaches the vehicle 20 with the portable device 40M that has received the pairing password PAS, pairing between the vehicle 20 and the portable device 40M is performed using the proximity communication device. The proximity communication device used for pairing may be at least one of the BLE module 23, the UWB module 24, and the NFC module 25. At this time, when the authentication of the portable device 40M with respect to the vehicle 20 is successful by using the pairing password PAS of the portable device 40M and the vehicle 20, the pairing is completed. When the pairing is complete, a secure channel is established for data communication between the vehicle 20 and the portable device 40M using the proximity communication device. Subsequently, the vehicle 20 advances the process to step S114. From this point onwards, communication between the vehicle 20 and the portable device 40M is conducted via this secure channel until the owner key KO is activated.

In step S114, the vehicle 20 generates a vehicle public key PKV, which is a public key of the vehicle 20, and a vehicle secret key SKV, which is a secret key of the vehicle 20. Next, the vehicle 20 transmits generation data DC for generating the owner key KO to the portable device 40M via the secure channel. The generation data DC includes the vehicle identification information ST1 and the vehicle public key information ST7 indicating the vehicle public key PKV. Upon receiving the generation data DC, the portable device 40M advances the process to step S115.

In step S115, the portable device 40M generates owner key information DKO indicating the owner key KO. Next, in step S116, the portable device 40M stores the owner key information DKO. Subsequently, the portable device 40M transmits, to the vehicle 20, the certificate information ST5 related to the owner key KO and the device public key information ST6 indicating the device public key PKD.

Upon receiving the certificate information ST5 and the device public key information ST6, the vehicle 20 executes the process of step S117. In step S117, the vehicle 20 verifies the certificate information ST5. When the verification of the certificate information ST5 is completed, the vehicle 20 advances the process to step S118.

In step S118, the vehicle 20 stores the device public key information ST6 indicating the device public key PKD in the storage device 28 as the authentication information AT. Subsequently, the vehicle 20 transmits an authentication completion notification D13 to the portable device 40M, indicating that the storage of the authentication information AT has been completed.

Upon receiving the authentication completion notification D13, the portable device 40M executes the process of step S119. In step S119, the portable device 40M generates a key status update request D14 for the owner key KO. The key status update request D14 is a signal for requesting that the management server 70 update the database DB. The portable device 40M transmits the key status update request D14 for the owner key KO to the management server 70 via the device server 60.

Upon receiving the key status update request D14, the management server 70 executes the process of step S120. In step S120, the management server 70 performs registration management of the owner key KO. Specifically, the management server 70 stores, in the database DB, the fact that the device 30 to which the owner key KO is registered is the portable device 40M as the data DA of the vehicles 20. As a result, the management system 10 terminates the series of processes for registering the owner key KO of the vehicle 20 to the portable device 40M and activating the owner key KO. The process from the pairing in step S113 to the activation of the owner key KO in step S120 is an activation process executed to register the owner key KO of the vehicle 20 to the portable device 40M.

### Registration of the Owner Key KO in the Virtual Devices 40V

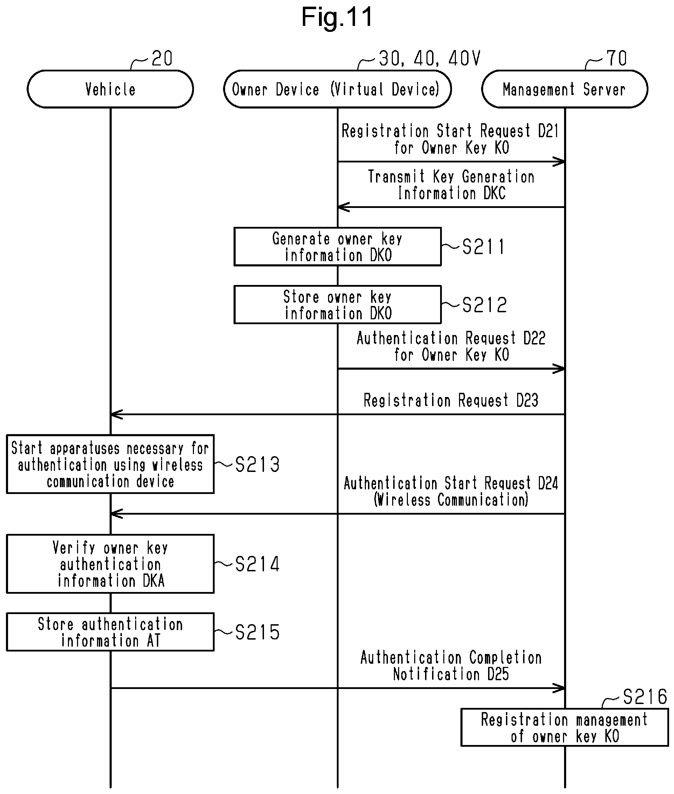

As shown in Fig. 11, the management system 10 executes a series of processes for registering the owner key KO of the vehicle 20 to the virtual device 40V. The virtual device 40V, which is the owner device 40 implemented on the server 80, activates the owner key KO using wireless communication without performing proximity communication with the vehicle 20.

In the management system 10, the owner key information DKO, which is the key information DK indicating the owner key KO of the vehicle 20, is stored in the virtual devices 40V by registering the owner key KO. In the management system 10, the authentication information AT for authenticating the owner key KO is stored in the vehicle 20. When the owner key KO is authenticated by the vehicle 20 and the owner key KO is registered to the management server 70, the owner key KO is activated.

As shown in Fig. 11, when the management server 70 receives a registration start request D21 for the owner key KO from the virtual device 40V, the registration process for the owner key KO is started. Upon receiving the registration start request D21, the management server 70 transmits key generation information DKC for the purpose of generating the owner key KO to the virtual device 40V. The registration start request D21 includes owner device identification information described later. The key generation information DKC includes information corresponding to the vehicle identification information ST1 and the vehicle public key information ST7 indicating the vehicle public key PKV. Upon receiving the key generation information DKC, the virtual device 40V advances the process to step S211.

In step S211, the virtual device 40V generates owner key information DKO indicating the owner key KO. Next, in step S212, the virtual device 40V stores the owner key information DKO. Subsequently, the virtual device 40V transmits authentication request D22 for the owner key KO to the management server 70. The authentication request D22 includes the owner key authentication information DKA, and the owner key authentication information DKA includes information corresponding to the certificate information ST5 related to the owner key KO and the device public key information ST6 indicating the device public key PKD.

Subsequently, upon receiving the authentication request D22, the management server 70 uses the communication module 73 to transmit registration request D23 to the vehicle 20. The registration request D23 includes information indicating that the owner device 40, to which the owner key KO is registered, is the virtual device 40V. For example, the registration request D23 includes the owner device identification information. On the other hand, the registration request D12 described above does not include information indicating that the owner device 40, to which the owner key KO is registered, is the virtual device 40V. The registration request D23 is a first registration request. The registration request D12 is a second registration request.

Upon receiving the registration request D23, the vehicle 20 starts apparatuses necessary for authentication of the owner key KO using the communication module 21 in step S213. These apparatuses are, for example, the communication module 21 and the digital key ECU included in the vehicle management device 26. By starting these apparatuses, the vehicle 20 is enabled to both wait for and execute the authentication of the digital key using the communication module 21.

Next, the management server 70, which has transmitted the registration request D23, uses the communication module 73 to transmit, to the vehicle 20, an authentication start request D24 for the owner key KO including the owner key authentication information DKA. Upon receiving the authentication start request D24, the vehicle 20 advances the process to step S214 to start authentication of the owner key KO.

In step S214, the vehicle 20 verifies the owner key authentication information DKA. When the verification of the information corresponding to the certificate information ST5 included in the owner key authentication information DKA is completed, the vehicle 20 advances the process to step S215.

In step S215, the vehicle 20 stores information corresponding to the device public key information ST6 indicating the device public key PKD as the authentication information AT. Subsequently, the vehicle 20 uses the communication module 21 to transmit an authentication completion notification D25 to the management server 70. The authentication completion notification D25 indicates that the storage of authentication information AT has been completed.

Upon receiving the authentication completion notification D25, the management server 70 executes the process of step S216. In step S216, the management server 70 performs registration management of the owner key KO. Specifically, the management server 70 stores, in the database DB, the fact that the device 30 to which the owner key KO is registered is the virtual device 40V as the data DA of the vehicles 20. As a result, the management system 10 terminates the series of processes for registering the owner key KO of the vehicle 20 to the virtual device 40V and activating the owner key KO. The activation process executed to register the owner key KO to the virtual device 40V includes the procedure from the verification of the owner key authentication information DKA in step S214 to the activation of the owner key KO in step S216.

Process of the Management Server 70 that Transmits a Registration Request

In the process of registering the owner key KO to the owner device 40, the management server 70 changes the process to be executed depending on whether the owner device 40 is the portable device 40M or the virtual device 40V. This process is executed by the execution device 71 in accordance with the boot program PB stored in the storage device 72 of the management server 70. This process is executed when the management server 70 receives the registration start request D11 or the registration start request D21 from the owner device 40.

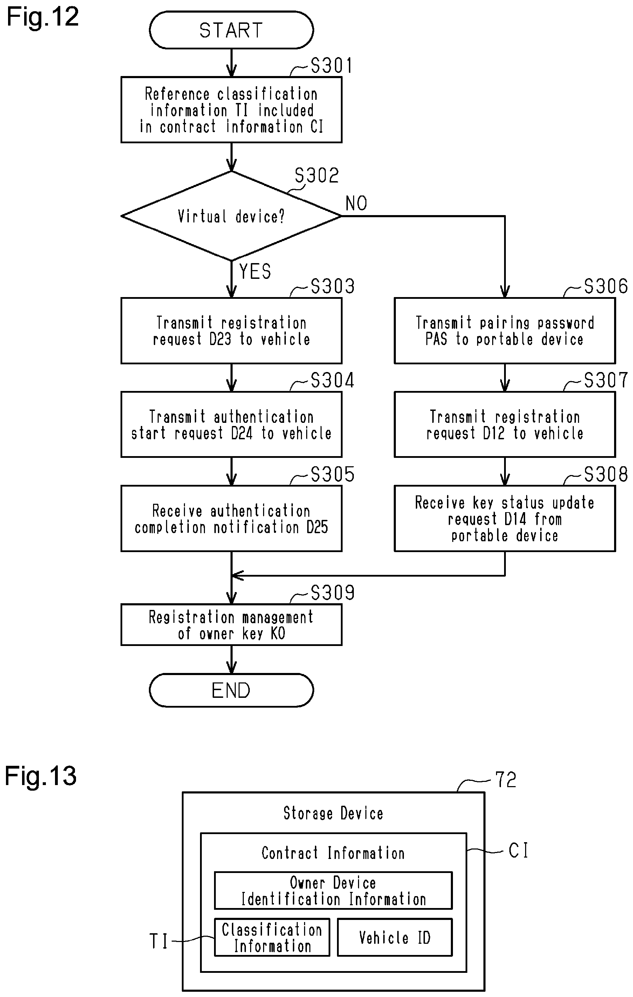

Fig. 12 is a flowchart of processes executed by the management server 70. First, in step S301, the management server 70 references classification information TI included in contract information CI. The contract information CI is stored in the storage device 72 when the contract for the vehicle 20 by the owner is completed. Therefore, when receiving the registration start request D11 or the registration start request D21 from the owner device 40, the management server 70 stores the contract information CI in the storage device 72.

As shown in Fig. 13, the contract information CI includes the classification information TI, which indicates whether the owner device 40 is the virtual device 40V or the portable device 40M. The contract information CI includes the owner device identification information that identifies the owner device 40 and a vehicle ID for identifying the vehicle 20. When the owner device 40 is the virtual device 40V, the owner device identification information is information that identifies, in the network 90, the virtual device 40V and the server 80 in which the virtual device 40V is implemented. The owner device identification information is, for example, IP addresses of the virtual device 40V and the server 80, or authentication information of certificates issued by the server 80. When the owner device 40 is the portable device 40M, the owner device identification information is information that identifies, in the network 90, the portable device 40M and the device server 60 to which the portable device 40M belongs. The owner device identification information is, for example, IP addresses of the portable device 40M and the device server 60, or a serial code of the portable device 40M. The management server 70 references the classification information TI to acquire information indicating whether the owner device 40 is the virtual device 40V or the portable device 40M. Then, in step S302, the management server 70 determines whether the owner device 40, to which the owner key KO is registered, is the virtual device 40V. When determining in step S302 that the owner device 40 is the virtual device 40V (step S302: YES), the management server 70 advances the process to step S303.

Next, in step S303, the management server 70 transmits, to the vehicle 20, the registration request D23 for the owner key KO including information indicating that the owner device 40 is the virtual device 40V. Subsequently, in step S304, the management server 70 transmits the authentication start request D24 to the vehicle 20. As shown in Fig. 11, when the management server 70 transmits the authentication start request D24 to the vehicle 20, the authentication process of the owner key KO in the vehicle 20 is started.

Subsequently, as shown in Fig. 12, in step S305, the management server 70 receives the authentication completion notification D25 from the vehicle 20. Then, the management server 70, which has received the authentication completion notification D25, advances the process to step S309. In step S309, the management server 70 performs registration management of the owner key KO corresponding to step S216 of Fig. 11.

As shown in Fig. 12, in step S302, when determining that the owner device 40 is the portable device 40M (step S302: NO), the management server 70 advances the process to step S306. In step S306, the management server 70 transmits, to the portable device 40M, information indicating the pairing password PAS, which is used for pairing with a proximity communication device. In step S307, the management server 70 uses the communication module 73 to transmit, to the vehicle 20, the registration request D12 for the owner key KO, which includes information indicating the pairing password PAS but does not include information indicating that the owner device 40 is the virtual device 40V. As shown in Fig. 10, after the management server 70 transmits the registration request D12 to the vehicle 20, pairing is performed between the vehicle 20 and the portable device 40M, and the authentication process of the owner key KO is started.

As shown in Fig. 12, in step S308, the management server 70 receives the key status update request D14 from the portable device 40M. Then, the management server 70, upon receiving the key status update request D14, advances the process to step S309. In step S309, the management server 70 performs registration management of the owner key KO corresponding to step S120 of Fig. 10.

As shown in Fig. 12, in step S309, when the registration management of the owner key KO is completed, the management server 70 terminates the series of processes for registering the owner key KO.

### Processes Executed by the Vehicle 20 Upon Receiving a Registration Request

In the process of registering the owner key KO to the owner device 40, the vehicle 20 changes the process to be executed depending on whether the owner device 40 is the portable device 40M or the virtual device 40V.

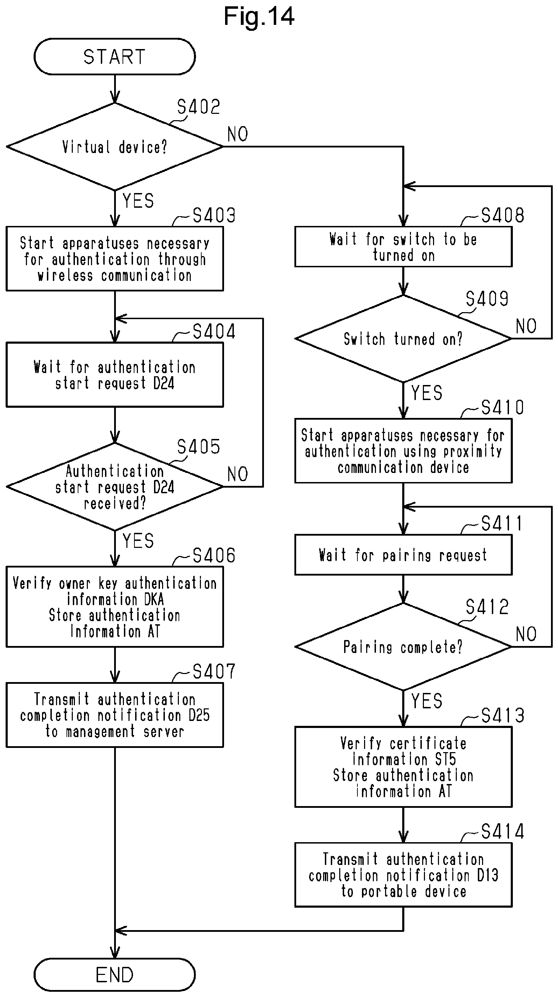

Fig. 14 shows a flowchart of processes executed by the execution device 27 of the vehicle 20. These processes are started when a vehicle 20 receives the registration request D12 or the registration request D23 from the management server 70.

In step S402, the vehicle 20 determines whether the owner device 40, to which the owner key KO is registered, is the virtual device 40V. Specifically, the vehicle 20 determines that the owner device 40 is the virtual device 40V when the registration request includes information indicating that the owner device 40, to which the owner key KO registered, is the virtual device 40V. The registration request D12 does not include information indicating that the owner device 40 is the virtual device 40V. Therefore, when receiving the registration request D12, the vehicle 20 determines that the owner device 40 is not the virtual device 40V. The registration request D23 includes information indicating that the owner device 40 is the virtual device 40V. Therefore, when receiving the registration request D23, the vehicle 20 determines that the owner device 40 is the virtual device 40V.

When determining in step S402 that the owner device 40 is the virtual device 40V (step S402: YES), the vehicle 20 advances the process to step S403.

In step S403, the vehicle 20 starts apparatuses necessary for authentication using the communication module 21. This step corresponds to step S213 in Fig. 11. Subsequently, the vehicle 20 advances the process to step S404 and waits for an authentication start request D24 from the management server 70. Then, in step S405, the vehicle 20 repeatedly executes the processes of step S405 and step S404 until the authentication start request D24 is received. In step S405, when receiving the authentication start request D24 from the management server 70 (step S405: YES), the vehicle 20 advances the process to step S406.

In step S406, the vehicle 20 verifies the owner key authentication information DKA and stores the authentication information AT. This step corresponds to steps S214 and S215 in Fig. 11. Thereafter, in step S407, the vehicle 20 transmits the authentication completion notification D25 to the management server 70.

When determining in step S402 that the owner device 40 is not the virtual device 40V (step S402: NO), the vehicle 20 advances the process to step S408.

In step S408, the vehicle 20 waits for a switch of the vehicle 20 to be turned on. When the switch of the vehicle 20 is turned on, the system of the vehicle 20 is started and the vehicle 20 begins operation. The vehicle 20 repeatedly executes the processes of step S408 and step S409 until it is determined in step S409 that the switch of the vehicle 20 has been turned on. When it is determined that the switch of the vehicle 20 is turned on (step S409: YES), the vehicle 20 advances the process to step S410.

In step S410, the vehicle 20 starts the apparatuses necessary for authentication using the proximity communication device. This step corresponds to step S112 in Fig. 10. Upon completion of the startup of the above apparatuses, the vehicle 20 advances the process to step S411 and waits for a pairing request from the portable device 40M.

The vehicle 20 repeatedly executes the processes of steps S411 and S412 until it is determined in step S412 that the pairing with the portable devices 40M has been completed. When it is determined that the pairing is completed (step S412: YES), the vehicle 20 advances the process to step S413.

In step S413, the vehicle 20 verifies the certificate information ST5 and stores the authentication information AT. This step corresponds to steps S117 and S118 in Fig. 10. Thereafter, in step S414, the vehicle 20 transmits the authentication completion notification D13 to the portable device 40M.

When the process of either step S407 or step S414 is completed, the vehicle 20 terminates the series of processes for registering the owner key KO.

### Operation of the Present Embodiment

When the owner device 40 is the virtual device 40V implemented on the server 80 connected to the network 90, the virtual device 40V cannot perform proximity communication with the vehicle 20. Therefore, the vehicle 20 cannot execute the activation process for the owner key KO via authentication that uses proximity communication. In a case in which the owner device 40 is the virtual device 40V, the vehicle 20 executes the activation process for the owner key KO via wireless communication that uses the communication module 21. When the owner device 40 is not the virtual device 40V, the vehicle 20 executes the activation process for the owner key KO using the proximity communication device.

### Advantages of the Present Embodiment

(1) In the vehicle 20, the activation process for the owner key KO can be executed even when the owner device 40 is the virtual device 40V implemented on the server 80.
(2) Upon receiving the registration request D23 from the management server 70, the execution device 27 of the vehicle 20 starts apparatuses used for the activation process for the owner key KO via wireless communication. The registration request D23 includes information indicating that the owner device 40, to which the owner key KO is registered, is the virtual device 40V.

After receiving the registration request D23 including the information indicating that the owner device 40 is the virtual device 40V, the vehicle 20 starts the apparatuses used for the activation process for the owner key KO via wireless communication. Specifically, when it is determined that it is necessary to start the apparatuses used for the activation process for the owner key KO via wireless communication, the vehicle 20 starts the apparatuses used for the activation process of the owner key KO via wireless communication.

In the vehicle 20, power consumption is reduced as compared to a case in which the apparatuses used for the activation process for the owner key KO via wireless communication are continuously kept in an operating state while awaiting reception of the registration request D23.

(3) In the vehicle 20, when the registration request D12 is received from the management server 70, the execution device 27 starts the proximity communication device and executes the activation process for the owner key KO via proximity communication. The registration request D12 does not include information indicating that the owner device 40, to which the owner key KO is registered, is the virtual device 40V.

When the owner device 40 is not the virtual device 40V on the server 80, the activation process can be executed via proximity communication with the vehicle 20 as in the related art.

In the vehicle 20, when the owner device 40 is not the virtual device 40V, the owner key KO can be activated via proximity communication as in the related art.

(4) When the vehicle 20 starts operating after the registration request D12 is received from the management server 70, the execution device 27 of the vehicle 20 starts the proximity communication device and executes the activation process for the owner key KO via proximity communication. The registration request D12 does not include information indicating that the owner device 40, to which the owner key KO is registered, is the virtual device 40V.

The activation process via proximity communication can only be executed when the owner device 40 is within the range of proximity communication. When the vehicle 20 is operating, it is highly likely that the owner, who possesses the owner device 40, is within the range of proximity communication. The vehicle 20 starts the proximity communication device when the vehicle 20 is started. That is, the vehicle 20 starts the proximity communication device when the owner carrying the owner device 40 is highly likely to be within the range of proximity communication.

In the vehicle 20, power consumption is reduced as compared to a case in which the proximity communication device is continuously put in an operating state to wait for the owner carrying the owner device 40 to enter the range in which proximity communication can be performed.

(5) The execution device 27 of the vehicle 20 starts the NFC module 25 as the proximity communication device, and executes the activation process for the owner key KO via NFC communication.

The vehicle 20 is capable of executing the activation process for the owner key KO via NFC communication, which is proximity communication.

(6) The execution device 27 of the vehicle 20 starts the UWB module 24 as the proximity communication device, and executes the activation process for the owner key KO via UWB communication.

The vehicle 20 is capable of executing the activation process for the owner key KO via UWB communication, which is proximity communication.

(7) The execution device 27 of the vehicle 20 starts the BLE module 23 as the proximity communication device, and executes the activation process for the owner key KO via BLE communication.

The vehicle 20 is capable of executing the activation process for the owner key KO via BLE communication, which is proximity communication.

(8) The management server 70 forms part of the digital key system that activates digital keys using the information that is related to the digital keys and stored in the vehicle 20 and information that is related to the digital keys and stored in the devices 30. The management server 70 manages the digital keys. The digital key registered to the owner device 40, which is the device 30 belonging to the owner of the vehicle 20, is the owner key KO. The management server 70 includes the execution device 71 and the communication module 73, which is a wireless communication device that communicates with the owner device 40 and the vehicle 20. The execution device 71 references the classification information TI, which indicates whether the owner device 40, to which the owner key KO is registered, is the virtual device 40V. The management server 70 determines whether the owner device 40, to which the owner key KO is registered, is the virtual device 40V. When determining that the owner device 40, to which the owner key KO is registered, is the virtual device 40V, the management server 70 uses the communication module 73 to transmit the registration request D23 to the vehicle 20. The registration request D23 includes information indicating that the owner device 40, to which the owner key KO is registered, is the virtual device 40V.

The management server 70 determines whether the owner device 40, to which the owner key KO is registered, is the virtual device 40V based on the classification information TI. When the owner device 40 is the virtual device 40V, the management server 70 transmits, to the vehicle 20, the registration request D23 including information indicating that the owner device 40 is the virtual device 40V. The management server 70 is capable of informing the vehicle 20 that the owner device 40, to which the owner key KO is registered, is the virtual device 40V.

(9) The execution device 71 of the management server 70 transmits, to the vehicle 20, the registration request D23 including information indicating that the owner device 40, to which the owner key KO is registered, is the virtual device 40V. In this case, the management server 70 uses the communication module 73 to transmit, to the vehicle 20, information related to the owner key KO necessary for the authentication of the owner key KO.

When the owner device 40, to which the owner key KO is registered, is the virtual device 40V, the management server 70 transmits, to the vehicle 20, information related to the owner key KO, which is used to authenticate the owner key KO in the vehicle 20. When the owner device 40 is the virtual device 40V, the management server 70 is capable of transmitting, to the vehicle 20, information necessary for authentication of the owner key KO, using the communication module 73.

(10) When determining that the owner device 40, to which the owner key KO is registered, is not the virtual device 40V, the execution device 71 of the management server 70 uses the communication module 73 to transmit, to the vehicle 20, the registration request D12. The registration request D12 does not include information indicating that the owner device 40, to which the owner key KO is registered, is the virtual device 40V.

When the owner device 40 that executes the registration process is not the virtual device 40V, the management server 70 transmits, to the vehicle 20, a registration request D12 that does not include information indicating that the owner device 40 is the virtual device 40V. The management server 70 is capable of informing the vehicle 20 that the owner device 40, to which the owner key KO of the vehicle 20 is registered, is not the virtual device 40V.

(11) The execution device 71 of the management server 70 transmits, to the vehicle 20, the registration request D12 not including information indicating that the owner device 40, to which the owner key KO is registered, is the virtual device 40V. In this case, the management server 70 uses the communication module 73 to transmit, to the vehicle 20, the registration request D12 including the pairing password PAS necessary for the activation process for the owner key KO via proximity communication between the owner device 40 and the vehicle 20. The management server 70 uses the communication module 73 to transmit, to the owner device 40, the pairing password PAS necessary for the activation process for the owner key KO via proximity communication between the owner device 40 and the vehicle 20.

When the owner device 40, to which the owner key KO is registered, is not the virtual device 40V, the management server 70 transmits the pairing password PAS to both of the owner device 40 and the vehicle 20. The pairing password PAS is used for pairing between the owner device 40 and the vehicle 20 in the activation process for the owner key KO via proximity communication. Pairing between the owner device 40 and the vehicle 20 initiates the authentication of the owner key KO via proximity communication. When the owner device 40 is not the virtual device 40V, the management server 70 is capable of transmitting information necessary for authentication of the owner key KO via proximity communication to the owner device 40 and the vehicle 20.

(12) The management server 70 includes the storage device 72, which stores the contract information CI including the classification information TI, the information that identifies the owner device 40, and the information that identifies the vehicle 20 belonging to the owner. The execution device 71 of the management server 70 acquires the classification information TI by referencing the contract information CI stored in the storage device 72.

The management server 70 acquires the classification information TI by referencing the contract information CI. Therefore, the management server 70 is capable of determining whether the owner device 40 is the virtual device 40V based on the contract information CI stored in the storage device 72.

### Modifications

The above-described embodiment may be modified as follows. The above-described embodiment and the following modifications can be combined if the combined modifications remain technically consistent with each other.

In the authentication of the owner key KO, the vehicle 20 uses the NFC module 25, the UWB module 24, and the BLE module 23 as the proximity communication devices. The vehicle 20 is capable of using only one or two of the above proximity communication devices in the authentication of the owner key KO. The vehicle 20 may perform authentication via proximity communication using a proximity communication device other than those described above. For example, the vehicle 20 may authenticate the owner key KO via Wi-Fi communication. Additionally, the vehicle 20 may also perform the authentication of the owner key KO via proximity communication by using a combination of the above proximity communication devices and Wi-Fi communication.

The management server 70 acquires the classification information TI by referencing the contract information CI stored in the storage device 72. The management server 70 may acquire the classification information TI without referencing the contract information CI. The execution device 71 of the management server 70 is capable of determining whether the owner device 40, to which the owner key KO is registered, is the virtual device 40V by referencing the classification information TI included in the registration start requests D21 and D11 transmitted from the owner device 40 to the management server 70.

The management server 70 acquires the classification information TI included in the registration start requests D11 and D21. Therefore, the management server 70 is capable of determining whether the owner device 40 is the virtual device 40V based on the registration start requests D11 and D21.

The management server 70 transmits, to the vehicle 20, the registration request D23, which includes information indicating that the owner device 40 is the virtual device 40V, after receiving the authentication request D22 shown in Fig. 11 and before transmitting the authentication start request D24. The management server 70 may also transmit the registration request D23 to the vehicle 20 at times other than those mentioned above. For example, the management server 70 is capable of transmitting the registration request D23 immediately after the contract information CI of the vehicle 20 is written to the storage device 72. In such cases, the management server 70 is capable of notifying the vehicle 20, immediately after storing the contract information CI, as to whether the registration process for the owner key KO is for registering the virtual device 40V as the owner device 40. For example, the management server 70 may transmit the registration request D23 upon receiving the registration start request D21 from the virtual device 40V. In such cases, the management server 70 is capable of notifying the vehicle 20, upon receiving the registration start request for the owner key KO from the owner device 40, as to whether the registration process for the owner key KO is for registering the virtual device 40V as the owner device 40.

The management server 70 transmits the registration request D12, which includes the information indicating that the owner device 40 is the portable device 40M simultaneously with the transmission of the pairing password PAS to the vehicle 20. The management server 70 may also transmit the registration request D12 to the vehicle 20 at times other than those mentioned above. For example, the management server 70 is capable of transmitting the registration request D12 immediately after the contract information CI of the vehicle 20 is written to the storage device 72.

In such cases, the management server 70 is capable of notifying the vehicle 20, immediately after storing the contract information CI, as to whether the registration process for the owner key KO is for registering the virtual device 40V as the owner device 40.

The management server 70 may transmit the registration request D12 upon receiving the registration start request D11 from the portable device 40M. In such cases, the management server 70 is capable of notifying the vehicle 20, upon receiving the registration start request D11 for the owner key KO from the owner device 40, as to whether the registration process for the owner key KO is for registering the virtual device 40V as the owner device 40.

In addition to the above, the management server 70 is capable of transmitting the registration requests D12 and D23 to the vehicles at any time before the authentication process of the owner key KO is started.

The vehicle management device 26 is not limited to the digital key ECU. The vehicle management device 26 may be, for example, a central ECU that integrally manages multiple ECUs included in the vehicle 20.

In the above-described embodiment, the vehicle management device 26 is provided with the execution device 27, which is processing circuitry including one or more processors that run computer programs (software) to execute various processes. However, the vehicle management device 26 may be provided with processing circuitry including one or more dedicated hardware circuits, such as application-specific integrated circuits (ASICs) that execute at least some of the processes. Alternatively, the vehicle management device 26 may be provided with processing circuitry including a combination of one or more processors and one or more dedicated hardware circuits. Each processor includes a CPU and memory such as RAM and ROM. The memory stores program codes or commands configured to cause the CPU to execute processes. The memory, namely, a computer-readable medium, includes any available medium that is accessible by a general-purpose or special-purpose computer. The same applies to the devices 30 and the management server 70.

The devices 30 and the portable devices 40M, which are portable information terminals, are not limited to smartphones. The devices 30 and the portable devices 40M, which are portable information terminals, may be smartwatches.

The virtual device 40V may be included in a specified server such as the server 80. For example, the virtual device 40V may be included in the management server 70. Similarly, the friend device 51 may be included in a specified server.

In the above-described embodiment, the digital keys are arranged in a hierarchy consisting of, in descending order, the owner key KO, the friend key KF, and the guest key KN, such that digital keys at higher hierarchical levels are assigned greater authority. However, the digital keys do not necessarily need to be configured such that higher hierarchical levels correspond to greater authority. For example, equal authority may be assigned to the three hierarchical levels: the owner key KO, the friend key KF, and the guest key KN.

A separate device server 60 does not necessarily need to be provided for each type of device 30. It is sufficient that the multiple devices 30 and the management server 70 can wirelessly communicate with each other. The device server 60 may be omitted from the management system 10. In the management system 10, it is sufficient that the multiple devices 30 and the management server 70 communicate directly via wireless communication.

The management server 70 may include multiple servers. For example, the management server 70 may include a server that stores the database DB, a server that executes the server program PS, and a server that executes the boot program PB. In addition, for example, the management server 70 may include a server that communicates with the vehicles 20 and a server that communicates with the device server 60, and these servers may communicate with each other.

The management server 70 does not necessarily need to store the database DB. The management server 70 may manage at least a combination of the key information DK of the device 30 and the authentication information AT of the vehicle management device 26 for one digital key in the management system 10.

The authentication information AT is not limited to the example of the above-described embodiment as long as it is information for authenticating the digital key when the digital key is used. For example, the authentication information AT may be a common key shared by the vehicle management device 26 and the device 30. Further, for example, the authentication information AT may be a shared secret key.

The configuration of the information included in the key information DK is not limited to the example of the above-described embodiment. For example, the owner key information DKO does not necessarily need to include the slot identification information ST4. Further, for example, the key information DK may include information indicating the type of the digital key. The type of the digital key is, for example, information indicating one of the owner key KO, the friend key KF, and the guest key KN.

The management system 10 may include information indicating the type of the devices 30 in the database DB. The type of the devices 30 is, for example, information indicating any one of a smartphone, a smartwatch, a server, and the like.

The structure of the data DA in the database DB is not limited to the example of the above-described embodiment. The database DB may be modified as long as it includes information necessary for the management server 70 to perform management in the management system 10.

In the database DB, the authority does not necessarily need to be uniformly determined according to the type of the digital key, and may be set for each digital key. In the database DB, the authority of the digital key does not necessarily need to be defined.

The shareable device 50 has a function of receiving the shareable key KS as in the above-described embodiment. A device 30 that is capable of receiving a digital key, such as an shareable device 50, may be referred to as a receiver device.

The digital key-related aspects in the above-described embodiment need not conform to the CCC standard.

Various changes in form and details may be made to the examples above without departing from the spirit and scope of the claims and their equivalents. The examples are for the sake of description only, and not for purposes of limitation. Descriptions of features in each example are to be considered as being applicable to similar features or aspects in other examples. Suitable results may be achieved if sequences are performed in a different order, and/or if components in a described system, architecture, device, or circuitry are combined differently, and/or replaced or supplemented by other components or their equivalents. The scope of the disclosure is not defined by the detailed description, but by the claims and their equivalents. All variations within the scope of the claims and their equivalents are included in the disclosure.

## Claims

1. A vehicle (20), comprising:
a wireless communication device (21) configured to communicate, via a wireless communication network, with a device (30) to which a digital key can be registered and a management server (70) that manages the digital key;
a proximity communication device (23, 24, 25) configured to communicate with the device (30) via proximity communication; and
an execution device (27) configured to execute a registration process for the digital key, wherein
the device (30) includes an owner device (40) belonging to an owner of the vehicle (20),
the digital key includes an owner key registered to the owner device (40),
the execution device (27) is configured to execute an activation process for the owner key when receiving a registration request of the owner key from the management server (70), and
the execution device (27) is configured to execute
the activation process via wireless communication using the wireless communication device (21) in a case in which the registration request includes information indicating that the owner device (40) is a virtual device (40V) implemented on a server (80), and
the activation process via proximity communication using the proximity communication device (23, 24, 25) in a case in which the registration request does not include the information indicating that the owner device (40) is the virtual device (40V).

2. The vehicle (20) according to claim 1, further comprising an apparatus used for the activation process via the wireless communication, the apparatus including the wireless communication device (21),
wherein the execution device (27) is configured to start the apparatus upon receiving, from the management server (70), the registration request (D23) including the information indicating that the owner device (40) is the virtual device (40V).

3. The vehicle (20) according to claim 1 or 2, wherein the execution device (27) is configured to start the proximity communication device (23, 24, 25) and execute the activation process via the proximity communication when receiving, from the management server (70), the registration request (D12) not including the information indicating that the owner device (40) is the virtual device (40V).

4. The vehicle (20) according to claim 3, wherein the execution device (27) is configured to start the proximity communication device (23, 24, 25) and execute the activation process via the proximity communication when the vehicle (20) is activated after receiving the registration request (D12) not including the information indicating that the owner device (40) is the virtual device (40V) from the management server (70).

5. The vehicle (20) according to claim 3 or 4, wherein the proximity communication device (23, 24, 25) includes an NFC module (25) that performs NFC communication.

6. The vehicle (20) according to any one of claims 3 to 5, wherein the proximity communication device (23, 24, 25) includes a UWB module (24) that performs UWB communication.

7. The vehicle (20) according to any one of claims 3 to 6, wherein the proximity communication device (23, 24, 25) includes a BLE module (23) that performs BLE communication.

8. A management server (70) forming part of a digital key system (10) that activates a digital key using information that is related to the digital key and stored in a vehicle (20) and information that is related to the digital key and stored in a device (30), the management server(70) being configured to manage the digital key, wherein
the device (30) includes an owner device (40) belonging to an owner of the vehicle (20),
the digital key includes an owner key registered to the owner device (40),
the management server (70) comprises:
a wireless communication device (73) configured to communicate with the owner device (40) and the vehicle (20); and
an execution device (71), and
the execution device (71) is configured to
determine whether the owner device (40) is a virtual device (40V) implemented on a server (80) by referencing classification information (TI) that indicates whether the owner device (40) is the virtual device (40V), and
when determining that the owner device (40) is the virtual device (40V), use the wireless communication device (73) to transmit a registration request (D23) including information indicating that the owner device (40) is the virtual device (40V) to the vehicle (20).

9. The management server (70) according to claim 8, wherein the execution device (71) is configured to use the wireless communication device (73) to transmit, to the vehicle (20), information related to the owner key necessary for authentication of the owner key, together with the registration request (D23).

10. The management server (70) according to claim 8 or 9, wherein
the registration request (D23) is a first registration request, and
the execution device (71) is configured to, when determining that the owner device (40) is not the virtual device (40V), use the wireless communication device (73) to transmit a second registration request (D12) not including the information indicating that the owner device (40) is the virtual device (40V) to the vehicle (20).

11. The management server (70) according to claim 10, wherein
the second registration request (D12) includes a pairing password (PAS) necessary for an activation process for the owner key by proximity communication between the owner device (40) and the vehicle (20), and
the execution device (71) is configured to use the wireless communication device (73) to transmit the pairing password (PAS) to the owner device (40).

12. The management server (70) according to any one of claims 8 to 11, further comprising a storage device (72) configured to store contract information (CI) including the classification information (TI), information that identifies the owner device (40), and information that identifies the vehicle (20) belonging to the owner,
wherein the execution device (71) is configured to acquire the classification information (TI) by referencing the contract information (CI) stored in the storage device (72).

13. The management server (70) according to any one of claims 8 to 11, wherein
the classification information (TI) is included in a registration start request (D11, D21) that is transmitted from the owner device (40) to the management server (70) and requests a start of a process of registering the owner key, and
the execution device (71) is configured to determine whether the owner device (40) is the virtual device (40V) by referencing the classification information (TI) included in the registration start request (D11, D21).
